Europäisches Patentamt

European Patent Office

Office européen des brevets

(19)

(11) Publication number: **0 150 728**
**A2**

# EUROPEAN PATENT APPLICATION

(21) Application number: **85100192.5**

(22) Date of filing: **10.01.85**

(51) Int. Cl.⁴: **G 02 F 1/133**

(30) Priority: **23.01.84 US 573004**

(43) Date of publication of application: **07.08.85**
**Bulletin 85/32**

(84) Designated Contracting States: **AT BE CH DE FR GB IT LI LU NL SE**

(71) Applicant: **ENERGY CONVERSION DEVICES, INC., 1675 West Maple Road, Troy Michigan 48084 (US)**

(72) Inventor: **Yaniv, Zvi, 27610 Arlington Court, Southfield Michigan 48076 (US)**
Inventor: **Cannella Vincent D., 18625 Devonshire, Birmingham, Michigan 48009 (US)**
Inventor: **Hansell, Gregory L., 433 Appletree Court, Camarillo California 93010 (US)**
Inventor: **Swartz, Louis D., 5695 Croveland Road, Holly Michigan 48442 (US)**

(74) Representative: **Müller, Hans-Jürgen, Dipl.-Ing. et al, Müller, Schupfner & Gauger Lucile-Grahn-Strasse 38 Postfach 80 13 69, D-8000 München 80 (DE)**

(54) **Liquid crystal displays operated by amorphous silicon alloy diodes.**

(57)    There are disclosed liquid crystal displays (10, 40, 90) each having at least one pixel element formed on an insulative substrate (12, 52, 72, 92) including at least two conductive electrodes (28, 36; 68, 88; 112, 118) and liquid crystal display material (30, 70, 120) disposed between the electrodes. The pixel elements further include at least a pair of diodes (18, 20; 58, 60 and 78, 80; 100, 102) formed from a deposited semiconductor material which facilitates selective excitation of the pixel elements and applied potential reversal across the electrodes (28, 36; 68, 88; 112, 118) during alternate display frames. Also disclosed is a method of making the liquid crystal displays (10, 40, 90).

EP 0 150 728 A2

ACTORUM AG

-1-

## LIQUID CRYSTAL DISPLAYS OPERATED BY
## AMORPHOUS SILICON ALLOY DIODES

The present invention relates generally to liquid crystal displays and more particularly to liquid crystal displays which are driven by diodes formed from deposited semiconductor materials.

There are many applications wherein liquid crystal displays are utilized to advantage. For example, liquid crystal displays find use in digital watches, digital clocks, calculators, pocket sized television receivers, and various forms of portable games, to name just a few.

Liquid crystal displays generally include a plurality of pixel elements arranged in rows and columns. Each pixel includes a pair of electrodes. As is well known, when a voltage is applied across the electrodes, the optical properties of the liquid crystal material can be changed to provide a light or dark display depending upon the type of liquid crystal material used and the desired mode of operation of the display.

To obtain a useable display, the voltage potential across the electrodes of each pixel must be selectively applied. In the prior art, the selective application of these voltage potentials has been accomplished through the use of thin film transistors. While thin film transistors are generally successful in these applications, they can only be used for small area liquid crystal displays. Conventional thin film transistors however exhibit relatively high power dissipation and low frequency operation. This limits the number of

-2-

pixels which can be driven in a liquid crystal display which in turn limits the liquid crystal display areas.

Another problem in using thin film transistors in liquid crystal displays is yield. Virtually one-hundred percent of all of the thin film transistors must be operational to obtain a useable display. Such yields are difficult to achieve over small display areas and virtually impossible to achieve for large area displays because the making of thin film transistors requires numerous process steps, many of which require extremely accurate photolithography. Accurate or precise photolithography is required to control important physical device dimensions, principal among them being the source to drain spacing which determines, in conventional planar thin film transistors, the length of the current conduction channel between the source and drain. The channel length dramatically effects both the device current and operating frequency limit. As a result, the high yields required cannot be readily achieved for large display areas with conventional photolithography techniques.

The present invention overcomes such deficiencies exhibited by thin film transistors by using diodes to drive the liquid crystal display pixels. Furthermore, the diodes can be formed without the need of precise photolithography and in fewer process steps than that required to form thin film transistors.

-3-

The use of diodes to drive liquid crystal displays has been previously proposed. However, previously proposed diode driven liquid crystal displays were limited to discrete diode devices which of course is not appropriate for large area displays employing potentially thousands of pixel elements. Such displays would be necessarily and unduely complicated both physically to implement and electrically to address the individual pixels.

The present invention overcomes these problems as well by forming the diodes integrally with the liquid crystal display structure. The diodes can be formed from deposited semiconductor materials by processes not incompatible with the other display processes.

It is also known that the useful life of a nematic liquid crystal display can be extended if the sense of the applied voltage potential is reversed during alternate frames. The liquid crystal displays of the present invention, while overcoming previous significant prior art problems, also provides such voltage potential reversal.

The present invention provides in a liquid crystal display, of the type having at least one pixel element including a pair of electrodes and liquid crystal display material disposed between the electrodes, the improvement comprising the at least one pixel element including at least a pair of diodes formed from deposited semiconductor material.

The present invention also provides a liquid crystal display including at least one pixel element wherein the pixel element is formed on an in-

-4-

sulative substrate and includes at least two address leads, a pair of series connected diodes coupled between the address leads, a first conductive electrode coupled between the diodes, a second electrode spaced from the first electrode, and liquid crystal display material disposed between the electrodes. The diodes are formed from a deposited semiconductor material. The deposited semiconductor material is preferably an amorphous semiconductor alloy including silicon. The diodes preferably include a first doped semiconductor region, an intrinsic semiconductor region overlying the first doped region, and a second doped semiconductor region opposite in conductivity with respect to the first doped region overlying the intrinsic region.

The present invention further provides a liquid crystal display including at least one pixel element, comprising first and second pairs of diodes, each diode pair being coupled in series relation, a first pair of address leads coupled to respective ends of one of the series coupled diodes, a second pair of address leads coupled to respective ends of the other of the series coupled diodes, a first electrode coupled to the junction of one of the pair of diodes, a second electrode coupled to the junction of the other pair of diodes, and liquid crystal display material disposed between the electrodes.

The present invention also provides a method of making a liquid crystal display including at least one pixel element. The method includes the steps of providing an insulative substrate, form-

-5-

ing an interconnect lead and an address lead on the substrate in spaced apart relation, forming a diode on each of the leads, forming a layer of insulative material between the diodes, forming an opening in the insulative layer communicating with the interconnect lead, forming a conductive electrode over the insulative layer in contact with the diode formed on the address lead and in contact with the interconnect lead through the opening, forming another address lead contacting the diode formed on the interconnect lead, applying liquid crystal display material over at least the conductive electrode, and forming a second conductive electrode over the liquid crystal display material.

The present invention still further provides a method of making a liquid crystal display including at least one pixel element including the steps of providing an insulative substrate, forming an interconnect lead and an address lead on the substrate in spaced apart relation, forming a diode on each of the leads, and forming a layer of insulative material between the diodes. The method further includes forming an opening in the insulative layer communicating with the interconnect lead, forming a conductive electrode over the insulative layer in contact with the diode formed on the address lead and in contact with the interconnect lead through the opening, and forming another address lead contacting the diode formed on the interconnect lead.

0150728

-6-

The foregoing steps are repeated to form first and second subassemblies. Thereafter, liquid crystal display material is applied over at least the electrode of one of the subassemblies and the electrode of the other subassembly is aligned with the electrode of the one subassembly with the liquid crystal display material therebetween.

Accordingly a first object of the invention is to provide a display of a type having at least one pixel including a pair of address lines, a pair of electrodes with light influencing material disposed between the electrodes, and the improvement is characterized by at least one pixel element, including at least a pair of diodes formed from a positive semiconductor material, with one of the diodes positioned on a region of one of the address lines.

A second object of the invention is to provide a display which includes at least one pixel, the pixel being formed on an insulative substrate and includes at least two address leads, and is characterized by a pair of series connected diodes coupled between the address leads, a first conductive electrode coupled between the diodes, a second electrode spaced from the first electrode, and light influencing material disposed between the electrodes, the diodes being formed from a deposited semiconductor material.

A third object of the invention is to provide a liquid crystal display which includes at least one pixel, the pixel includes first and second pairs of diodes, and is characterized by each of the diode pair being coupled in series relation, a first pair of address leads coupled to the respective ends of one of these series coupled diodes and a second pair of address leads coupled to respective ends of the other of the series coupled diodes. The display is further characterized by a first electrode coupled to the junction of one of the pair of diodes, a second electrode coupled to the junction of the other pair of diodes, and liquid crystal display material disposed between the electrodes.

A fourth object of the invention is to provide a liquid crystal display which includes at least one pixel, the pixel being formed on a insulative substrate and includes at least two address leads and a pair of diodes each having an anode and a cathode. The liquid crystal display is characterized by diodes being coupled together with the anode of each of the diodes being coupled to the cathode of the other diodes, a first conductive electrode diode, the diodes also being coupled between the first electrode and one of the address leads, a second electrode spaced from the first electrode and coupled to the other address lead, and liquid crystal display material disposed between the electrodes, the diodes being formed from a deposited semiconductor material.

A fifth object of the invention is to provide a method of making a liquid crystal display including at least one pixel, wherein the method is characterized by the steps of providing an insulative substrate while forming an interconnect lead and an address lead on the substrate in spaced apart relation, forming a diode on each of the leads with a layer of insulative material between the diodes, forming an opening in the insulative layer communicating with the interconnect lead, forming a conductive electrode over the insulative layer in contact with the diode formed on the address lead and in contact with the interconnect lead through the opening, forming another address lead contacting the diode formed on the interconnect lead and applying liquid crystal display material over at least the conductive electrode while forming a second conductive electrode over the liquid crystal display material.

A sixth object of the invention is to provide a method of making a liquid crystal display including at least one pixel, the method characterized by the steps of providing an insulative substrate while forming an interconnect lead and an address lead on the substrate in spaced apart relation, forming a diode on each of the leads while forming a layer of insulative material between the diodes, forming an opening in the insulative layer communicating with the interconnect lead while forming a conductive electrode over the insulative layer in contact with the diode formed on the address lead and in contact with the interconnect lead through the opening, forming another address lead contacting the diode formed on the interconnect lead, repeating the above steps to form first and second subassemblies, applying liquid crystal display material over at least the electrode of one of the subassemblies and aligning the electrode of the other subassembly with the electrode of one subassembly with liquid crystal display material therebetween.

A seventh object of the invention is to provide a method of making a liquid crystal display including at least one pixel, the method characterized by the steps of providing an insulative substrate while forming an address lead on the substrate, forming a first interconnect lead over the address lead in spaced apart relation therefrom while forming a diode on each of the leads, forming a layer of insulative material between the diodes while forming an opening in the insulative layer communicating with the first interconnect lead, forming a conductive electrode on the substrate in contact with the diode formed on the address lead and in contact with the first interconnect lead through the opening, forming a second interconnect lead contacting the diode formed the address lead and the diode formed on the first interconnect lead, applying liquid crystal display material over at least the conductive electrode and forming a second conductive electrode over the liquid crystal display material.

An eighth object in the invention is to provide a method of forming a plurality of discrete individual electronic devices on a substrate, wherein the devices include a plurality of semiconductor regions, and wherein the method is characterized by the steps of successively forming a plurality of layers of semiconductor materials on the substrate over an area substantially larger than the area of the devices to be formed on the

-10-

substrate to form the plurality of semiconductor regions and removing area portions of all of the layers of semiconductor materials to leave remaining the discrete individual devices on the substrate.

A ninth object of the invention is to provide a method of forming a plurality of discrete individual electronic devices on a substrate, wherein the devices include a plurality of semiconductor regions, and wherein the method is characterized by the steps of successively forming a plurality of layers of semiconductor materials on the substrate over an area substantially larger than the area of the devices to be formed on the substrate to form the plurality of semiconductor regions, forming a layer of protective material over the last formed layer of the plurality of layers of semiconductor material and removing selected portions of the semiconductor material layers while using the protective layer to protect non-selected area portions of the semiconductor material layers from removal to thereby define the bodies of the discrete devices.

A tenth object of the invention is to provide a method of making a liquid crystal display including a plurality of pixels, and wherein the method is characterized by the steps of providing an insulative substrate while forming, for each pixel, a first conductive address lead with at least one discrete isolation device for each pixel formed on the first address lead, isolation devices being formed by successively depositing a plurality of layers of semiconductor material over

-11-

the address leads and substrate and thereafter removing portions of all the layers of semiconductor material to leave remaining the discrete isolation devices on the first address lead. The method is further characterized by forming a first pixel electrode over the substrate for each pixel in electrical contact with its respective isolation devices on the side opposite the first address lead, forming a second pixel electrode in spaced apart substantially parallel relation to each first pixel electrode, forming a second address lead for each second pixel electrode and applying liquid crystal material between the first and second pixel electrodes.

The preferred embodiment of the invention will now be described by way of example, with reference to the drawings accompanying this specification in which:

Figure 1 is a cross sectional side view of a liquid crystal display pixel embodying the present invention;

Figure 2 is a top plan view as seen along lines 2-2 of Figure 1;

Figure 3 is a schematic circuit diagram illustrating the equivalent circuit of the liquid crystal display pixel of Figure 1;

Figure 4 is a cross sectional side view of another liquid crystal display pixel embodying the present invention;

Figure 5 is a schematic circuit diagram illustrating the equivalent circuit of the liquid crystal display pixel of Figure 4;

-12-

Figure 6 is a cross sectional side view of another liquid crystal display pixel embodying the present invention; and

Figure 7 is a schematic circuit diagram illustrating the equivalent circuit of the liquid crystal display pixel of Figure 6.

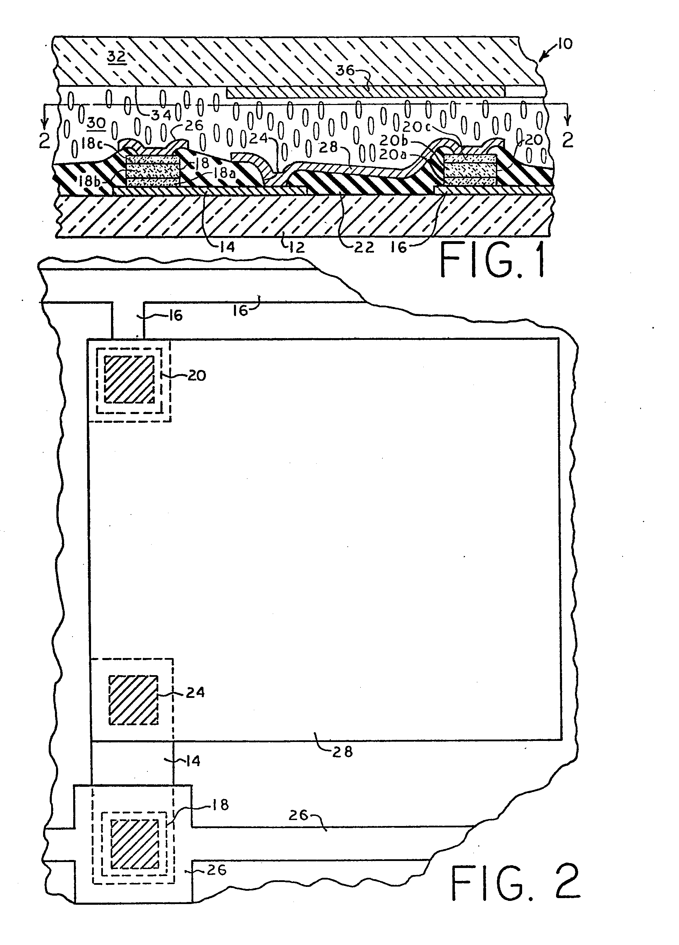

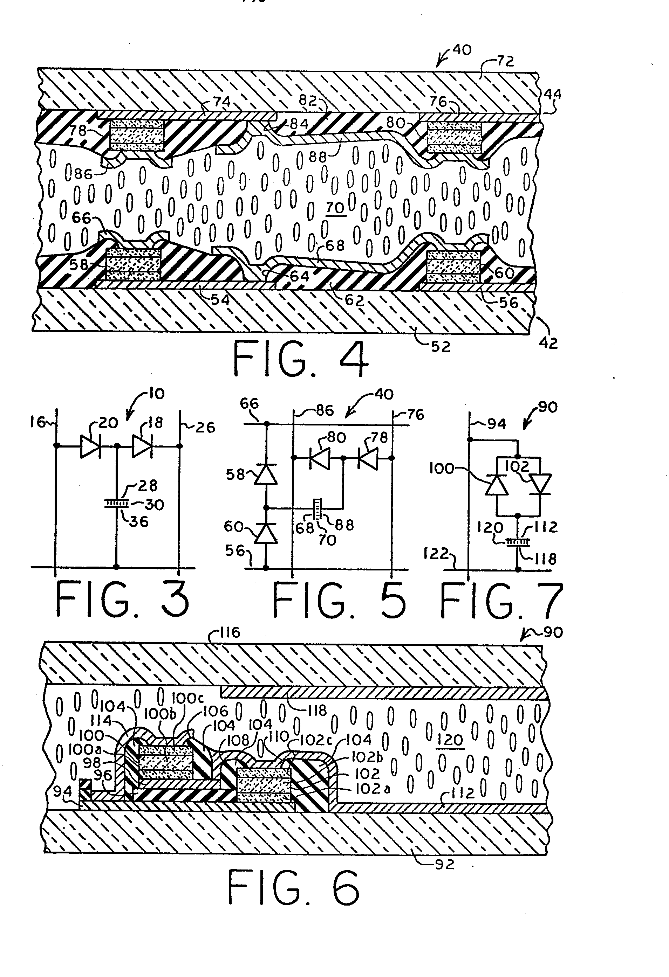

Referring now to Figures 1 and 2, they illustrate a liquid crystal display pixel 10 embodying the present invention. Although just one pixel 10 is illustrated, it can be appreciated that many such pixels can be formed in for example, a row and column arrangement to provide a complete liquid crystal display.

The pixel 10 includes an insulative substrate 12 which can be formed from glass, for example. Formed on the glass substrate 12 is an interconnect bus or lead 14 and a first address lead 16. The interconnect lead 14 and first address lead 16 can be formed from a conductive material such as metal, for example, aluminum, molybdenum, or a molybdenum tantalum alloy. Other suitable metals are chromium, tantalum tungsten, palladium and platinum. The interconnect lead 14 and first address lead 16 are formed by, for example, S-gun magnetron sputtering the metal over the entire surface area of the glass insulative substrate 12 and then removing selected portions of the deposited metal by utilizing a mask and photolithography techniques of the type well known in the art.

The pixel 10 further includes a pair of diodes 18 and 20 formed on the interconnect lead 14 and first address lead 16 respectively. The

-13-

diodes 18 and 20 are preferably formed from a deposited semiconductor material. The deposited semiconductor material is preferably an amorphous semiconductor alloy including silicon. The amorphous silicon alloy can also include hydrogen and/or fluorine and can be deposited by plasma assisted chemical vapor deposition i.e. glow discharge as disclosed, for example, in United States Patent No. 4,226,898 which issued on October 7, 1980 in the names of Stanford R. Ovshinsky and Arun Madan for Amorphous Semiconductors Equivalent To Crystalline Semiconductors Produced By A Glow Discharge Process. The diodes 18 and 20 preferably have a p-i-n configuration formed by a first doped region 18a and 20a, which can be p-type, an intrinsic region 18b and 20b overlying the first doped regions 18a and 20a respectively, and a second doped region 18c and 20c, which can be n-type, overlying the intrinsic regions 18b and 20b respectively.

The diodes 18 and 20 can be formed more specifically by depositing the previously mentioned amorphous silicon alloy regions over the entire surface area of the substrate 12 and interconnect lead 14 and first address lead 16 and thereafter selectively etching portions of the amorphous silicon alloy regions by utilizing a suitable mask and conventional photolithography techniques. The mask utilized during the etching process preferably defines a diode configuration wherein each diode is about 20 microns to 50 microns on a side. Representative thicknesses for the amorphous silicon alloy regions can be, for example,

-14-

300 Angstroms to 1,000 Angstroms and preferably 500 Angstroms for the p-type regions, 1,000 Angstroms to 10,000 Angstroms and preferably 3,000 Angstroms for the intrinsic regions, and 100 to 500 Angstroms and preferably 200 Angstroms for the n-type regions.

Formed over the interconnect lead 14, the substrate 12, and the first address lead 16, and in between the diodes 18 and 20 is a layer of insulating material 22. The insulating material 22 can be formed from any deposited insulator such as silicon oxide ($Si_xO_y$) or silicon nitride ($Si_xN_y$), or a polyimide, for example. The insulating layer 22 defines an opening 24 which communicates with the interconnect lead 14. The configuration of the insulating layer 22 can be obtained by roller, extrusion, or spin coating the polyimide, for example, over the entire surface area, spin coating a layer of photoresist over the polyimide layer, and then exposing and developing out both of the photoresist and the polyimide using a further mask. This step forms the opening 24 communicating with the interconnect lead 14 and uncovers upper surface portions of the n-type amorphous silicon alloy regions 18c and 20c of diodes 18 and 20.

The pixel 10 further includes a second address lead 26 in electrical contact with the n-type region 18c of diode 18 and a first electrode 28 which is an electrical connection with the interconnect lead 14 through the opening 24 and the n-type region 20c of diode 20. The first electrode 28 and the second address lead 26 can be

-15-

formed from any of the metals previously referred to with respect to the interconnect lead 14 and first address lead 16 by sputtering the metal over the entire surface area of the polyimide 22, the exposed surface portions of the diodes 18 and 20, and the opening 24. The second address lead 26 and the first electrode 28 can then be configured by utilizing a suitable mask and conventional photolithography techniques.

It must be appreciated that the structure illustrated in Figures 1 and 2 are not drawn to scale and that the first electrode 28 defines the liquid crystal display area of the pixel 10. The first electrode 28 can be configured in a square configuration as illustrated in Figure 2 and can be, for example, 300 microns to 2,000 microns on a side depending on the overall size of the finished display matrix and the desired aspect ratio.

With the first electrode 28 contacting the interconnect lead 14 through the opening 24, the diodes 18 and 20 are connected together in series relation. As can also be noted in Figure 1, the address leads 16 and 26 are only in electrical connection with the first electrode 28 through the diodes 18 and 20.

Overlying the resulting structure described above, is a layer of liquid crystal display material 30. The liquid crystal display material 30 can be of any conventional variety, as for example, nematic liquid crystal display material.

The pixel 10 is completed with a top transparent insulative plate 32 formed from, for example, glass. On the inner surface 34 of the insu-

-16-

lative plate 32 is formed a layer of transparent conductive material 36 which can be, for example, indium tin oxide. The indium tin oxide layer 36 forms a second electrode of the pixel 10 which is in contact with the liquid crystal material 30. It is configured to have the same dimension as the eletrode 28 and is aligned therewith. The top insulative plate 32 is polarized in a manner well known in the art consistent with the type of liquid crystal display material 30 utilized in the pixel 10.

Referring now to Figure 3, it illustrates the equivalent circuit diagram of the pixel 10 of Figure 1. As can be noted from Figure 3, the pixel includes the address leads 16 and 26, a pair of series connected diodes 18 and 20 coupled between the address leads 16 and 26, and the first conductive electrode 28 coupled between the diodes. The pixel 10 further includes the second electrode 36 spaced from the first electrode 28. In between the electrodes 28 and 36 is the liquid display material 30.

As previously explained, the useful life of a nematic liquid crystal display can be extended if the sense of the applied voltage potential is reversed during alternant frames. This can be accomplished with the pixel 10 of Figure 1 by impressing a positive potential onto first address lead 16 and a negative potential onto second electrode 36 during one frame to forward bias diode 18 and by impressing a negative potential onto address lead 26 and a positive potential on the electrode 36 during the next frame. Repeating

-17-

this sequence causes the potential applied to the liquid crystal display material to be reversed during alternate frames.

Referring now to Figure 4, it illustrates another liquid crystal display pixel 40 structured in accordance with another embodiment of the present invention. The pixel 40 as will be appreciated hereinafter, includes two pairs of diodes and is formed by first and second subassemblies 42 and 44 respectively.

Each of the subassemblies 42 and 44 are substantially identical to the portion of the liquid crystal display pixel 10 of Figure 1 beneath the liquid crystal display material 30. Essentially, the second subassembly 44 is the mirror image of the first subassembly 42.

Like the pixel 10 of Figure 1, the first subassembly 42 includes an insulative substrate 52 which can be formed from, for example, glass. The first subassembly 42 further includes an interconnect lead 54, a first address lead 56, and a first pair of diodes 58 and 60 which can be substantially identical to the p-i-n diodes 18 and 20 of pixel 10. Between the diodes 58 and 60 and defining an opening 64 communicating with the interconnect lead 54 is a layer of insulative material 62 which, can be a polyimide, for example. The first subassembly 42 is completed with a second address lead 66 and a first electrode 68. The first subassembly 42 can be fabricated by the same method as described with respect to the pixel 10 of Figure 1 and therefore need not be reiterated herein.

-18-

The procedure by which the first subassembly 42 is fabricated can be repeated to provide the second subassembly 44. To that end, as can be noted from the Figure, the subassembly 44 also includes an insulative substrate 72, an interconnect lead 74, a first address lead 76, a second pair of diodes 78 and 80, an insulating layer 82 defining an opening 84 communicating with interconnect lead 74, a second address lead 86, and a second electrode 88. If the liquid crystal display material 70 between the subassemblies 42 and 44 is to be viewed through the second subassembly 44, then the second electrode 88 should be formed from a transparent conductive material, such as, for example, indium tin oxide and the insulative substrate 72 should be formed from a transparent material such as glass which is polarized in a manner consistent with the liquid crystal display material 70 utilized between the subassemblies.

Referring now to Figure 5, it illustrates the equivalent circuit diagram of the pixel 40 of Figure 4. As can be noted from the diagram, the pixel 40 includes a first pair of diodes 58 and 60 and a second pair of diodes 78 and 80. Each pair of diodes is coupled in series relation. The pixel 40 further includes a first pair of address lead 56 and 66 coupled to the respective ends of the series coupled diodes 58 and 60 and a second pair of address leads 76 and 86 coupled to respective ends of the other pair of series coupled diodes 78 and 80. The first electrode 68 is coupled to the junction of the diodes 58 and 60 and the second electrode 88 is coupled to the

-19-

junction of the diodes 78 and 80. Lastly, liquid crystal display material 70 is disposed between the electrodes 68 and 80.

Like the pixel 10 of Figure 1, the potential applied to the liquid crystal material 70 can be reversed during alternate frames. During one frame, a positive potential can be applied to address lead 76 and a negative potential to address lead 66. During alternate frames, a positive potential can be applied to address lead 56, and a negative potential to address lead 86. In this manner, the potential applied to the liquid crystal material 70 can be reversed during alternant frames.

Referring now to Figure 6, it illustrates a further liquid crystal display pixel 90 embodying the present invention. The pixel 90 is formed on an insulative substrate 92, such as glass, for example. Formed on the glass substrate 92 is a first address lead 94. The first address lead 94 can be formed from a conductive metal as in the previous embodiments and can be, for example, aluminum, molybdenum, or a molybdenum tantalum alloy. Other suitable metals are chromium, tantalum tungsten, palladium, and platinum. The first address lead 94 can be formed by, for example, S-gun magnetron sputtering the metal over the entire surface area of the glass substrate 92 and then removing selected portions of the deposited metal by using a mask and photolithography techniques of the type well known in the art.

-20-

The pixel 90 further includes an insulating pad 96 which overlies a portion of the first address lead 94. The insulating pad 96 can be formed from any deposited insulators such as silicon oxide or silicon nitride. The insulative pad 96 can be formed by plasma assisted chemical vapor deposition. The insulator can be deposited over the entire surface area of the substrate 92 and address lead 94 and thereafter by utilizing a suitable mask and conventional photolithography techniques, removing selected portions of the insulating layer to form the pad 96.

After the insulating pad 96 is formed, an interconnect lead 98 is formed over a portion of the insulating pad 96. The interconnect lead 98 can be formed from any of the metals previously referred to for forming the address lead 94. It can also be formed by S-gun magnetron sputtering the metal over the entire surface area of the substrate 92, the first address lead 94, and the insulating pad 96, and thereafter removing selected portions of the metal by utilizing a mask and conventional photolithography techniques.

The pixel 90 further includes a pair of diodes 100 and 102. The diodes 100 and 102 are preferably formed from a deposited semiconductor material, and preferably, amorphous silicon alloys as previously referred to. The diodes 100 and 102 preferably include a p-type region 100a and 102a, an intrinsic region 100b and 102b, and an n-type region 100c and 102c. The diodes 100 and 102 can

-21-

be formed in the same manner as disclosed with respect to the previous embodiments of Figures 1 and 4.

The pixel 90 further includes insulating portions 104. The insulating portions 104 can be formed from any deposited insulator such as silicon oxide or silicon nitride. During the photolithography step in forming the portions 104, openings 106, 108, and 110 can be formed therein to expose surface portions of the n-type regions of the diodes 100 and 102 and a surface portion of the interconnect lead 98.

The pixel 90 further includes a bottom electrode 112 and a second interconnect lead 114. The bottom electrode 112 and second interconnect lead 114 can be formed from any of the metals previously referred to and by S-gun magnetron sputtering the metal over the entire surface area and thereafter removing selected portions thereof by conventional photolithography techniques. As will be noted from Figure 6, the second interconnect lead 114 contacts the first address lead 94 and the n-type region 100c of diode 100 through the opening 106 of the insulating portions 104. The bottom electrode 112 contacts the first interconnect lead 98 through the opening 108 and the n-type region 102c of diode 102 through the opening 110. As a result, the anode of diode 102 is coupled to the cathode of diode 100 and the anode of diode 100 is coupled to the cathode of diode 102. Also, the joint connection between the anode of diode 100 and the cathode of diode 102 is coupled to the first or bottom electrode 112.

-22-

The pixel 90 further includes an insulative transparent plate 116 which has a transparent conductive material 118 deposited on its inner surface to form the second electrode of the pixel 90. The transparent conductor 118 is configured to have the same dimensions as the effective dimensions of the first or bottom electrode 112 and is aligned therewith. Disposed between at least the electrodes 112 and 118, and in contact therewith, is liquid crystal display material 120, which can be, for example, nematic liquid crystal material of the type well known in the art. The top transparent plate 116 can be, as in the previous embodiments, polarized in a manner consistent with the type of liquid crystal display material 120 utilized in the display.

Referring now to Figure 7, it illustrates the equivalent schematic circuit diagram of the liquid crystal display pixel 90 of Figure 6. As can be noted in Figure 7, the pixel includes the pair of diodes 100 and 102 with the cathode of diode 100 and the anode of diode 102 coupled together and to the first address lead 94. The anode of diode 100 and the cathode of diode 102 are also coupled to together and to the first electrode 112. The second electrode 118 is coupled to a second address lead 122 (not shown in Figure 6) and the liquid crystal display material 120 is disposed between and in electrical contact with at least the electrodes 112 and 118.

Like the pixels of the previous embodiments, the potential applied to the liquid crystal material 120 can be reversed during alternate frames.

-23-

During one frame, a positive potential can be applied to address lead 94 and a negative potential to address lead 122. During alternate frames, a positive potential can be applied to address lead 122, and a negative potential to address lead 94. In this manner, the potential applied to the liquid crystal material 120 can be reversed during alternate frames.

As can be appreciated by those skilled in the art, the present invention can be practiced otherwise as specifically disclosed herein. For example, the diodes of the displays can be formed from deposited semiconductor materials other than amorphous semiconductor alloys. For example, the diodes can be formed from polycrystalline semiconductor alloys. Furthermore the amorphous semiconductor alloy material diodes can be formed from other material configurations than the p-i-n configuration described herein. For example, configurations such as p-$\pi$-n, p-$\nu$-n, p-n, etc are possible where $\pi$ and $\nu$ refer to lightly doped p and n-type semiconductor material respectively. Also, if high voltage turn-on is desired for the pixels, the diodes can be formed in a stacked or tandem configuration.

Energy Conversion Devices, Inc.
Case 671
2979. PT-DE HJM/kh

Claims

1. A display (10, 40) of the type having at least one pixel
including a pair of address lines (16, 26 and 56, 66; 76, 86),
a pair of electrodes (28, 36 and 68, 88) with light influencing material (30, 70) disposed between said electrodes,
characterized by said at least one pixel element including
at least a pair of diodes (18, 20 and 58, 60; 78, 80) formed
from deposited semiconductor material with one of said diodes
(20; 60 and 80) positioned on a region of one of said address
lines (16 and 56; 76).

2. A display according to claim 1, further characterized by
said deposited semiconductor material being an amorphous semiconductor silicon alloy which inludes hydrogen or fluorine.

3. A display according to claim 1 or 2 further characterized
by said diodes (18, 20) which include a first doped semiconductor region (18a, 20a), an intrinsic semiconductor region
(18b, 20b) overlying said first doped region, and a second
doped semiconductor region (18c, 20c) overlying said intrinsic
region, said first and second doped semiconductor regions being
opposite in conductivity.

4. A display according to one of the preceding claims, characterized in that the pair of series connected diodes (18, 20 and
58, 60; 78, 80) is coupled between said address leads, that
a first conductive electrode (28, 68) is coupled between said
diodes, that a second electrode (36, 88) is spaced from said
first electrode, and that the light influencing material (30, 70) is disposed between said electrodes.

5. A display according to claim 3 or 4 characterized therein that said first doped semiconductor region being n-type.

6. A display according to one of the preceding claims further characterized by an interconnect lead (14, 54, 98), said interconnect lead and one of said address leads being formed on said substrate (12, 52, 92) in spaced apart relation, and further characterized by one of said diodes (20, 60, 102) being formed on said one of said address leads and said other diode (18, 58, 100) being formed on said interconnect lead.

7. A display according to claim 6 characterized therein that a layer of insulating material (22, 62, 104) is produced of a polyimide, extends between said diodes (18, 20; 58, 60; 100, 102) and has an opening (24; 64; 106, 108, 110) communicating with said interconnect lead (14, 54, 98), and further characterized by one of said electrodes (28, 68, 112) being formed over said insulating layer, extends through said opening to contact said interconnect lead and electrically contacts said diode (20, 60, 102) formed on said one address lead (16, 56, 94) for connecting said diodes in series relation.

8. A display according to claim 7 further characterized by said other electrode (36, 88, 118) being formed from a transparent conductive material and further includes a transparent support member, wherein said transparent conductive material forming said other electrode being deposited on said support member.

9. A display as claimed in one of the preceding claims characterized therein that each said diode pair being coupled in series relation, a first pair of address leads (56, 66) coupled to respective ends of one of said series coupled diodes , a second pair of address leads (76, 86) coupled to respective ends of the other of said series coupled diodes (78, 80), a first electrode (68) coupled to the junction of one of said pair of diodes, a second electrode (88) coupled to the junction ofthe other said pair of diodes, and liquid crystal display material (70) disposed between said electrodes.

10. A display according to one of the preceding claims further characterized by said other electrode (118) being formed from a transparent conductive material and further characterized by a transparen support member, said transparent conductive material forming said other electrode being deposited on said support member.

11. A method of making a liquid crystal display including at least one pixel, said method characterized by the steps of:
    a) providing an insulative substrate;
    b) forming an interconnect lead and an address lead on said substrate in spaced apart relation;
    c) forming a diode on each of said leads;
    d) forming a layer of insulative material between said diodes;
    e) forming an opening in said insulative layer communicating with said interconnect lead;
    f) forming a conductive electrode over said insulative layer in contact with said diode formed on said address lead and in contact with said interconnect lead through said opening;
    g) forming another address lead contacting said diode formed on said interconnect lead;
    h) applying liquid crystal display material over at least said conductive electrode; and
    i) forming a second conductive electrode over said liquid crystal display material.

12. A method according to claim 11 further characterized by said diodes being formed from deposited semiconductor materials.

13. A method according to claim 12 further characterized by said deposited semiconductor material being an amorphous semiconductor silicon alloy which includes hydrogen or fluorine.

14. A method according to one of claims 11 - 13 further characterized by the steps of providing a transparent support member, depositing said second electrode onto said support member, and thereafter aligning said second electrode with said first electrode with said liquid crystal display material therebetween.

15. A method according to one of claims 11 - 14 further characterized by the steps of:
    repeating steps (a) through (g) to form first and second subassemblies;
    applying liquid crystal display material over at least the electrode of one of the subassemblies; and
    aligning the electrode of the other said subassembly with the electrode of said one subassembly with said liquid crystal display material therebetween.

16. A method of forming a plurality of discrete individual electronic devices on a substrate, wherein said devices include a plurality of semiconductor regions, said method characterized by the steps of:
    successively forming a plurality of layers of semiconductor materials on said substrate over an area substantially larger than the areas of said devices to be formed on said substrate to form said plurality of semiconductor regions; and
    removing area portions of all of said layers of semiconductor materials to leave remaining said discrete individual devices on said substrate.

17. A method according to claim 16 further characterized by said semiconductor materials being deposited by vapor deposition being a glow discharge decomposition deposition of at least silane gas (SiH$_4$) and/or tetrafluoride gas (SiF$_4$) with hydrogen gas or fluorine gas being mixed with said silane gas prior to said deposition.

FIG.1

FIG. 2

0150728

2/2

FIG. 4

FIG. 3

FIG. 5

FIG. 7

FIG. 6